Europäisches Patentamt

European Patent Office

Office européen des brevets

(11) Publication number: **0 393 915**
**A2**

# EUROPEAN PATENT APPLICATION

(21) Application number: **90303868.5**

(51) Int. Cl.⁵: **G11B 33/14**

(22) Date of filing: **10.04.90**

(30) Priority: **17.04.89 US 338920**

(43) Date of publication of application:
**24.10.90 Bulletin 90/43**

(84) Designated Contracting States:
**DE FR GB**

(71) Applicant: **International Business Machines
Corporation
Old Orchard Road
Armonk, N.Y. 10504(US)**

(72) Inventor: **Brooks, Peter Everett
5370 Timberridge Court SE
Rochester, Minnesota 55904(US)**
Inventor: **Rigotti, James Michael
2605 Oslo Court NE
Rochester, Minnesota 55904(US)**

(74) Representative: **Moss, Robert Douglas
IBM United Kingdom Limited Intellectual
Property Department Hursley Park
Winchester Hampshire SO21 2JN(GB)**

(54) **Magnetic disk drive with seal.**

(57) A disk drive includes a cast base 5 which supports the spindle assembly and the actuator assembly, and a cover 11 that is loosely received by the cast base to form the head-disk enclosure. The cover is secured and sealed to the cast base by a malleable metal foil tape 30 that surrounds the enclosure and continuously overlies the interface between cover and base. The tape complies with the surface irregularities and does not creep, to provide permanent shielding and sealing between base and cover. Cable exiting the enclosure is sealed using a piece of double sided adhesive between the cable and the casting, with the malleable foil tape thereover. Thus no significant thickness is added to the enclosure by the tape, which also provides noise and EMC shielding in addition to securing and sealing the cover.

FIG. 2

## MAGNETIC DISK DRIVE WITH SEAL

Field of the invention

The invention pertains to magnetic disk drives, and more particularly to means for sealing and shielding the head-disk enclosure in such devices.

Background of the invention

To maintain the clean environment required within the head-disk enclosure of a magnetic disk drive, it is necessary to seal all interfaces between components forming the enclosure. As the data storage capacity of magnetic disk drives increases, less space is available for sealing the unit with conventional elastomeric gaskets and clamping devices, and for providing cable exits (drives that utilize large rubber cover gaskets normally pinch flex cables between the gasket and the corresponding sealing surface). It is important to minimise the volume occupied by the sealing, shielding and retaining means, but even more importantly, the seal for the disk drive must not impose forces on the enclosure components that create even minute distortions. Any alternative sealing and retaining system must also be able to accommodate cable exits from the sealed enclosure.

The volumetric density of a drive can be increased by reducing the sealing system to a thin tape wrapped around the junction of the enclosure portions, such as disclosed in pending European Application 90300883.7. However, problems are encountered with this solution. For example, most tapes are composed of pressure sensitive adhesives attached to elastomeric backers and are poor conductors of electrical currents. The nonconductive gaps bridged by the seal are areas of electromagnetic noise leakage into the enclosure. This noise interferes with the ability of the file to read. Even when a conductive metallic tape is used, as in pending European Application 90300884.5, the adhesives tend to be sensitive to creep. When the tape is applied to a discontinuity, including a lap joint upon itself, the backer applies a constant tensile load. This load causes the adhesive to fail in creep and the tape to pull away from the joint. A gap is produced which allows air leakage into the enclosure.

Disclosure of the Invention

Thus there is a clear need for a compact, effective sealing system that can provide electromagnetic shielding and allow for cable egress, but which imparts no stresses to the head-disk enclosure producing unwanted distortions.

Accordingly, the invention provides for a magnetic disk drive having an enclosure housing a head-disk assembly, the enclosure maintaining the head-disk assembly in a sealed clean environment and comprising: adjoining first and second enclosure portions; and a compliant tape for sealing the junction between said first and second enclosure portions, said tape comprising an adhesive layer and a substantially non-elastic metal foil backer, such that said tape is sufficiently malleable to conform to irregularities between said enclosure portions without inducing tensile stress.

The compliant tape seals the enclosure and maintains the position and alignment of the enclosure portions, whilst occupying a minimum of space. When the tape is applied to a discontinuity, the malleable backer conforms, leaving very little load on the adhesive, thereby preserving the integrity of the seal over time. The metallic foil might typically be made of copper, and about 0.05 mm thick, with a layer of adhesive about 0.025-0.05 mm thick. Preferably, the adhesive is an electrically pressure sensitive adhesive so that the conductive nature of the tape and adhesive together provide electromagnetic compatibility (EMC) protection, although sometimes EMC requirements can be met just by the metallic tape with a non-conductive adhesive.

Preferably the first enclosure portion is a base casting, and the second enclosure portion is a drawn metal cover, these two enclosure portions being shaped to fit together. The spindle assembly and the actuator assembly are supported on the base casting. To accommodate exit cables, a length of double sided adhesive is applied to the cover adjacent the flex cable exit. The flex cable is folded down to be adhered to the upper surface of the double sided adhesive to form an air tight seal between the cover and the lower surface of the flex cable. As the compliant metal foil backed tape is applied over the junction between base and cover and over the double sided adhesive, the cover is sealed to the base and the sealed integrity is also established with respect to the cable exiting from the enclosure.

Brief description of the drawings

Fig. 1 is an exploded isometric view of a rigid magnetic disk drive;

Fig. 2 is an isometric view of the disk drive of Fig. 1 with sealing means according to the invention;

Fig. 3 is a view of the head-disk enclosure from the disk drive of Fig. 1 with the cover removed, showing a flat flexible cable that exits the enclosure, and a roll of sealing tape; and

Figs. 4A, 4B and 4C illustrate the technique for sealing the interface between the base casting and the cover where the flat cable of Fig. 3 exits the enclosure.

Detailed Description

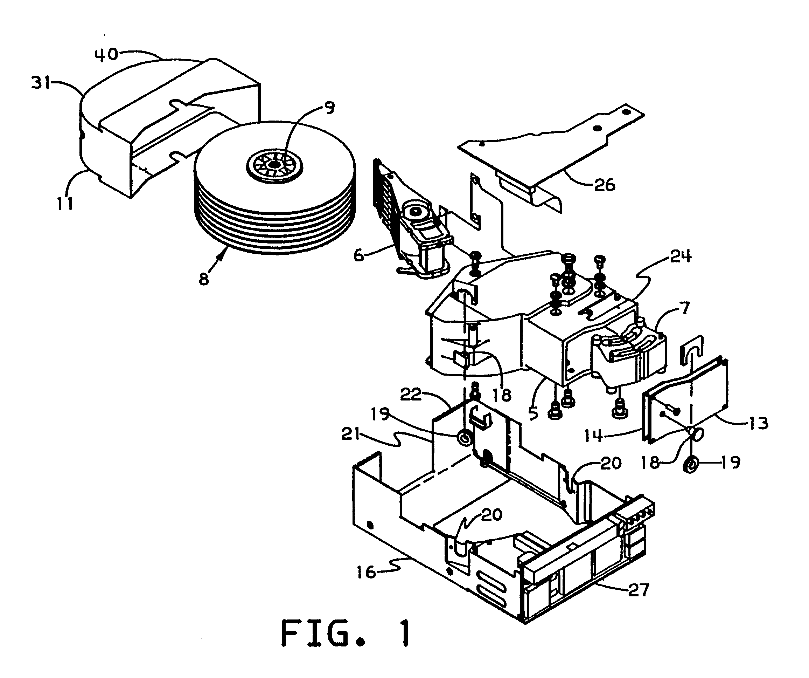

Fig. 1 illustrates a disk drive wherein a base casting 5 supports a head-disk assembly comprising a rotary actuator 6 and the cooperating magnet-pole piece assembly 7, and the spindle assembly 8 which includes the disk stack and a concentrically mounted motor within hub 9. At the end of casting 5 from which the disks protrude, the enclosure is completed by a drawn metal cover 11 of matching shape, and at the end adjoining the voice coil motor magnet assembly 7, a cover 13 and a gasket 14 complete the head-disk enclosure. The enclosure is effectively sealed with the exception of a breather filter (not shown) which is provided to allow equalization of pressure differences resulting from thermal change or variations in atmospheric pressure. The conventional practice is to place the breather filter to access the location of lowest pressure within the head-disk enclosure to ensure that any undesired leakage through a gasket or otherwise is out of the enclosure, so that only air filtered through the breather filter enters the enclosure. The head-disk enclosure is shock mounted in a frame 16 by three projections 18 that are respectively surrounded by elastomer elements 19 and received in three respective slotted openings 20. The compactness of the drive design may be appreciated by the fact that the frame 16 has a cutout portion 21 in the end wall 22 to accommodate the end of the head-disk enclosure cover 11 and a reduced height at both the top and bottom of casting portion 24, that surrounds the actuator voice coil motor, to enable upper and lower circuit cards 26, 27 to extend the full width of the frame 16. Cover 11 has a substantially cylindrical side wall portion 40 which closely confines the disk stack and a more deeply drawn side wall portion 31 which receives and supports a recirculating filter cartridge.

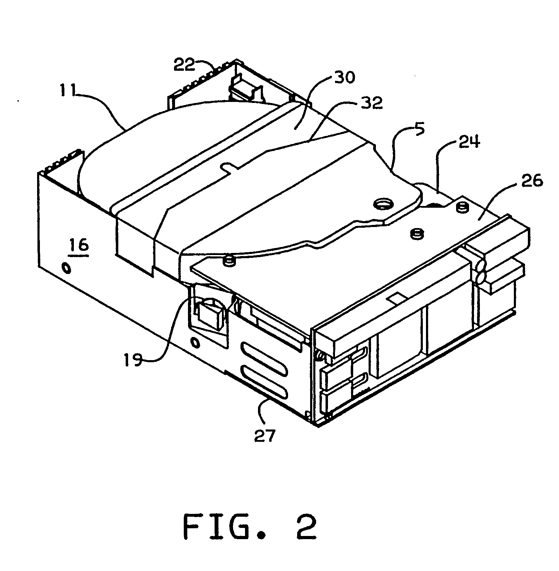

Fig. 2 illustrates the disk drive of Fig.1 in the assembled condition with the cover 11 sealed to the base casting 5 by a length of tape 30 that surrounds the head-disk enclosure and continuously overlies the parting line 32 between cover and base casting. The tape 30 as shown in Fig. 2 is a continuous length of tape, although, because of the nonelasticity and compliance capability of the malleable metal foil tape, it would also be possible to use more than a single length of tape to perform the sealing without compromising the effectiveness of the seal.

Tape 30 is a metal foil which carries an adhesive. The metal foil is malleable or dead soft such that it possesses no elasticity or memory that would tend to restore the material to or approaching an original condition. The elasticity of normal tapes causes a tensile force to be present when the tape is stressed, resulting in creep that often causes failure of the seal where the tape extends over a discontinuity. The malleable foil tape conforms to the surface to which it is applied and permanently deforms to maintain permanent intimate contact. A typical metal foil tape is a two thousandths inch (0.05 mm) copper foil which carries an adhesive of one or two thousandths inch (0.025-0.05 mm) thickness. The metal foil maintains intimate contact with each of the surface irregularities as indicated in Fig. 2 by the visibility of the parting line 32 where cover 11 and the cast base 5 adjoin. The most critical locations regarding the the seal effected by the tape are inside curves where an elastic tape would tend to restore, pull away over time and break the continuity of the seal. Such inside curved surfaces can be largely avoided through the design of the structure, but some occurrences are unavoidable, such as where the tape ends overlap and where cables extend through the taped seal as shown hereafter. The foil component of the tape provides a conductive shield that covers as well as shields the nonconductive gaps bridged by the tape, providing EMC protection and preventing electromagnetic noise leakage into the enclosure that would interfere with the read function.

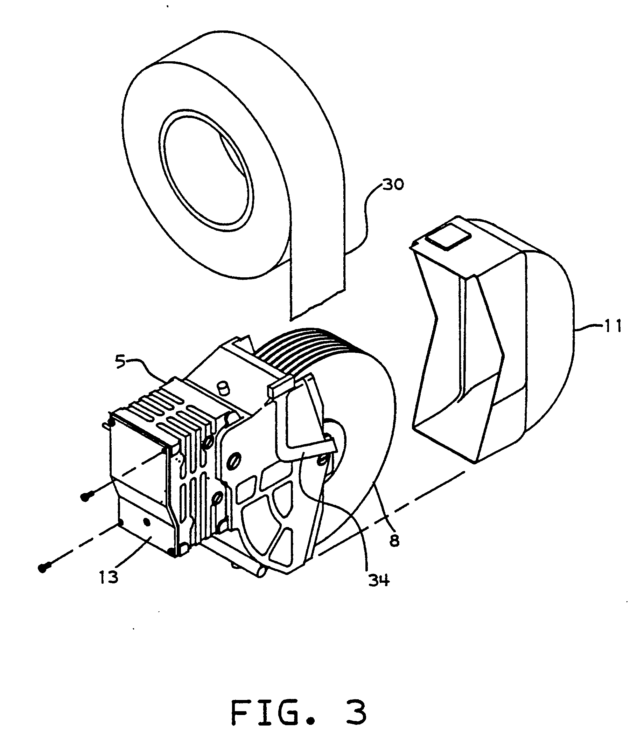

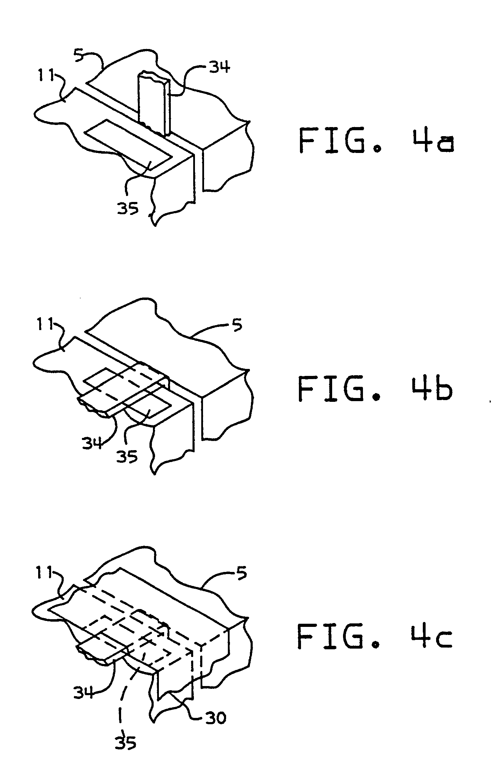

Fig. 3 illustrates the head-disk assembly with the cover 11 removed and a roll of sealing tape. The tape can be dispensed from a roll or may be precut to the desired length. The tape may be precut to desired configuration as well as length and where significant deformity is to occur it may be deformed to comply with such structural irregularity. Also shown is a flat cable 34 that communicates with the spindle motor circuitry. Cable 34 must extend from the spindle motor to a connector outside the enclosure without compromising the seal. This is accomplished using the technique illustrated in Figs. 4A through 4C. Cable 34 extends from the spindle motor that is concentrically mounted within the disks of the spindle assembly 8 (Fig. 1). A piece of double sided adhesive 35 is adhered to the cover 11 and the cable 34 is folded against the upper adhesive surface as shown in Fig 4B. Thereafter, the metal foil sealing tape is applied as illustrated in Fig. 4C to wholly overlie the piece of double sided adhesive 35. Care is also taken to position the tape in the inside curves that occur at each side of the cable 34 and adhesive 35.

The adhesive carried by tape 30 may be either conductive or nonconductive. Although a conductive adhesive assures the electrically conductive continuity of the enclosure, the malleable metal foil of the tape so closely conforms to the enclosure portions and any surface irregularities that electrical shielding and conductive continuity are successfully achieved even with the use of a nonconductive adhesive.

**Claims**

1. A magnetic disk drive having an enclosure housing a head-disk assembly, said enclosure maintaining said head-disk assembly in a sealed clean environment and comprising:
adjoining first and second enclosure portions (5, 11); and
a compliant tape (30) for sealing the junction (32) between said first and second enclosure portions, said tape comprising an adhesive layer and a substantially non-elastic metal foil backer such that said tape is sufficiently malleable to conform to irregularities between said enclosure portions without inducing tensile stress.

2. A magnetic disk drive as claimed in claim 1, wherein said adhesive is an electrically conductive pressure sensitive adhesive.

3. A magnetic disk drive as claimed in any preceding claim, wherein said metal foil is made of copper.

4. A magnetic disk drive as claimed in claim 3, wherein said copper metal foil has a thickness of about 0.05 mm, and said adhesive a thickness approximately in the range 0.025-0.05 mm.

5. A magnetic disk drive as claimed in any preceding claim, wherein said drive includes a spindle assembly (8, 9) and an actuator assembly (6, 7), and said first enclosure portion is a cast metal member which supports said spindle assembly and said actuator assembly.

6. A magnetic disk drive as claimed in claim 5, wherein said second enclosure portion is a drawn metal cover (11), and said compliant tape secures and seals said cover to said cast member so that said metal foil overlies any discontinuities between said cover and said cast member to form a single continuous electrically shielding structure enclosing said head-disk assembly.

7. A magnetic disk drive as claimed in any preceding claim, wherein said disk drive further comprises a flat flexible cable member (34) extending from said head-disk assembly and having egress from said enclosure at the junction between said first and second enclosure portions; and a double-sided adhesive tape (35) adhered on its first side to the exterior of one of said enclosure portions adjacent the egress of said conductor, and on its second side to said cable member, with said compliant tape overlying said cable member and said double-sided adhesive to seal said cable egress.

8. A magnetic disk drive as claimed in any preceding claim, wherein said compliant tape is a single continuous strip with the ends thereof overlapped.

FIG. 1

EP 0 393 915 A2

FIG. 2

EP 0 393 915 A2

FIG. 3

FIG. 4a

FIG. 4b

FIG. 4c